# EUROPEAN PATENT SPECIFICATION

(11) **EP 3 267 301 B1**
(45) Date of publication and mention of the grant of the patent: **11.08.2021**
(21) Application number: 16758463.0
(22) Date of filing: 01.03.2016
(51) Int. Cl.: G06F 3/023, G06F 3/0488

(54) **HIGH-EFFICIENCY TOUCH SCREEN TEXT INPUT SYSTEM AND METHOD**
SYSTEM UND VERFAHREN ZUR HOCHEFFIZIENTEN BERÜHRUNGSBILDSCHIRMTEXTEINGABE
SYSTÈME ET PROCÉDÉ D'ENTRÉE DE TEXTE D'ÉCRAN TACTILE DE HAUTE EFFICACITÉ

(30) Priority: 03.03.2015 CN 201510095074
(43) Date of publication of application: 10.01.2018
(73) Proprietor: Shanghai Chule (CooTek) Information Technology Co., Ltd, Shanghai 200233 (CN)
(72) Inventor: GAN, Lu, Shanghai 200233 (CN)
(74) Representative: Grünecker Patent- und Rechtsanwälte PartG mbB
(86) International application number: PCT/CN2016/075184
(87) International publication number: WO 2016/138848

(56) References cited:
- WO-A1-2014/114133
- CN-A- 101 299 177
- CN-A- 101 419 504
- CN-A- 103 389 878
- US-A1- 2008 304 890
- US-A1- 2012 203 776
- US-A1- 2013 046 544
- US-A1- 2014 372 880
- US-A1- 2014 372 923

## Description

### TECHNICAL FIELD

The present invention relates to the field of electronics and, in particular, to applications for electronic products. More specifically, the invention is directed to a system and method for efficient text entry with a touch screen.

### BACKGROUND

Nowadays, portable electronic devices such as smart phones and tablet PCs have been increasingly popular. As basic tools for human-computer interaction, text entry methods have a direct impact on users' experience on the use of such electronic devices.

During use of a text entry application, typing operations are made intensively by a user at an average interval ranging from tens of microseconds to one or two hundred microseconds. Upon the receipt of each input signal, a processor acquires a corresponding character matched with the signal and obtains a result from an action made on the basis of the acquired character, such as a search performed in a dictionary in accordance with an algorithm or a prediction. A variety of entry methods additionally provide responses for improving the user's experience, such as highlighting a pressed key or a swipe path, displaying a character just entered by the user in a particular color in candidate words, or sorting candidate words updated based on the character just entered by the user.

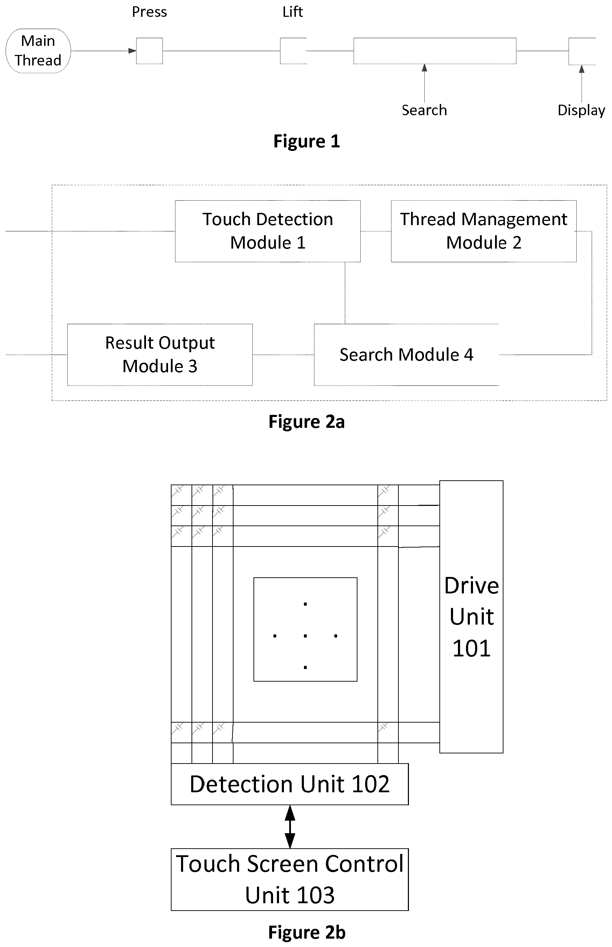

However, reference is now made to Fig. 1, a diagram schematically showing a process for handling a tap gesture by a conventional system. In response to the gesture, a main thread is started to detect the user's operation. Only when the system has detected a press on and then a lift from the touch screen, it will conduct a search for the tap. That is, only when the system determines that the press and lift constitute a tap, it will then carry out a search in the dictionary based on the tap and will display a result of the search. However, in order to achieve a higher degree of intelligence and higher accuracy, dictionaries employed in the input methods are always expanding in terms of their size. For example, those used in the entry methods developed by us are sized up to more than 10 Mb. The larger the size of a dictionary is, the longer the time the processor will take to accomplish a search, prediction or another action, i.e., the slower it will respond to output the result. During use of such an entry method which is of an instrumental nature, the user concerns much about how fast it responds. If a response occurs within 0.5-1 second after a typing operation, the user will feel a delay which may significantly deteriorate the use experience.

In order to overcome the contradiction between fast response and accurate entry, there have been proposed a number of solutions in the art intended to achieve a balance therebetween. For instance, in one solution, a concept is introduced in which a large dictionary is broken down into a multitude of smaller ones, called cell dictionaries. This solution requires the user to choose in advance dictionaries to be used, and only when the user has chosen a limited number of appropriate cell dictionaries, could response be accelerated without compromising the input accuracy. However, in most cases, since it is impossible for the user to know which dictionaries the words or phrases intended to be entered belong to, the preliminary choice of appropriate dictionaries may fail. On the other hand, choosing all available cell dictionaries is equivalent to choosing the parent dictionary, which could not result in faster response, but rather, would further retard the response due to the overhead on construction of the cell dictionaries from the parent.

Therefore, there is a need for a method and device which can mitigate the contradiction between fast response and accurate entry.

WO 2014/114133 A1 relates to an input method and apparatus of a circular touch keyboard. Disclosed is an input method of a circular touch keyboard, which comprises an internal keypad and an external keyboard area. The internal keypad comprises eight zones; and the external keyboard area comprises eight keypads, wherein each keypad comprises four zones, and each zone represents one corresponding character or character operation. The circular touch keyboard is internally provided with an input module used for detecting a sliding input action of a user on the keypads and the internal keypad. The input method of the circular touch keyboard comprises: detecting click information of the user who clicks on the circular touch keyboard, and entering a pre-input state according to the click information; detecting action information of the user who slides on the circular touch keyboard for input; obtaining an input character corresponding to the action information, and outputting the input character. Also disclosed is an input apparatus of the circular touch keyboard. The invention according to this document can be used to input characters and words quickly and easily.

US 2014/0372880A1 relates to a computing device that outputs a graphical keyboard comprising a plurality of keys for display at a presence-sensitive display, receives an indication of at least one gesture to select a group of keys of the plurality of keys, and determines at least one characteristic associated with the at least one gesture to select the group of keys of the plurality of keys. The computing device modifies a spatial model based at least in part on the at least one characteristic and determines a candidate word based at least in part on data provided by the spatial model and a language model, wherein the spatial model provides data based at least in part on the indication of the at least one gesture and wherein the language model provides data based at least in part on a lexicon. The computing device outputs for display at the presence-sensitive display, the candidate word.

US 2013/046544 A1 relates to a method of inputting text comprising a sequence of zones selected by the user being analysed to present word choices corresponding to the zone selected by using a predictive algorithm.

It is an object of the present invention to provide a system and method for efficient text entry with a touch screen, which allow the user to enter the text faster with guaranteed high accuracy.

This object is solved by the subject-matter of the independent claims.

Embodiments of the present invention are defined by the dependent claims.

### SUMMARY

It is an object of the present invention to overcome the above drawbacks of the conventional techniques by presenting a system and method for efficient text entry with a touch screen, which allow the user to enter the text faster with guaranteed high accuracy.

Compared to the prior art, the proposed system and method offer the benefits as follows.

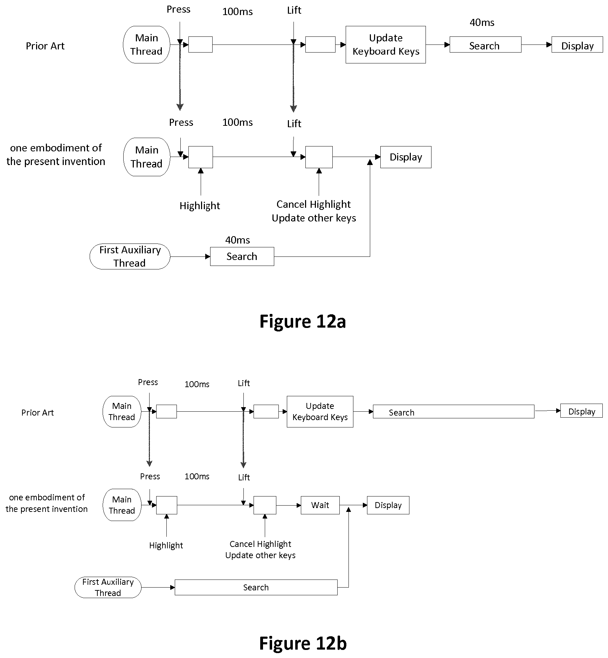

Figs. 12a and 12b depict comparisons between technical effects of the present invention and the prior art. As shown in the figures, according to the prior art, a time interval between a press and lift is generally 100 ms, and a search is carried out only after the lift is detected. That is, the user has to expect a result after the completion of the search commenced upon the detection of the lift. As such, subject to limitations on the speed at which the search is performed in a related database or even to limitations on the networking speed, the user often feels a pause or delay. In contrast, according to the present invention, immediately after a press is detected, an auxiliary thread is initiated to perform a search, and a result of the search is made available when a corresponding lift is detected. In such a way, the user can obtain the result in a timely way, and as the search is performed synchronously with the gesture made by the user on the touch screen, even if the search has taken a time several times as required normally due to a large database space or slow networking, the user would still feel that the entry is smooth. With the present invention, for each tap made by the user, an increase of 40-50% in the entry speed can be achieved, allowing faster entry and better human-computer interaction. In addition, it is to be noted that, compared to the prior art in which 4.29% of tap gestures takes more than 150 ms, the present invention significantly decreases the proportion to 2.5% and hence further improve the user's entry experience. Further, a large number of caches are used in the prior art in order to speed up the response to each tap, but no significant acceleration is observed. With the present invention, the number of required caches and hence the required memory space can be reduced, resulting in enhancements in the overall system operation.

### BRIEF DESCRIPTION OF THE DRAWINGS

Fig. 1 is a diagram schematically showing a conventional process for handling a tap gesture.
Fig. 2a is a structural schematic of a system for efficient text entry with a touch screen in accordance with the present invention.
Fig. 2b is a structural schematic of a touch detection module in accordance with an example useful for understanding the invention.
Fig. 3 is a structural schematic of a system for efficient text entry with a touch screen in accordance with another embodiment of the present invention.
Fig. 4 is a flowchart illustrating steps of a method for efficient text entry with a touch screen in accordance with an embodiment of the present invention.
Figs. 5a to 5d schematically show control of a keyboard on a touch screen by an UI control module in accordance with one embodiment of the present invention.
Fig. 6 is a flowchart illustrating steps of a method for efficient text entry with a touch screen in accordance with the present invention.
Fig. 7 schematically shows a main thread and auxiliary threads for handling multiple presses in accordance with the present invention.
Fig. 8 schematically shows a main thread and auxiliary threads for handling a single press in accordance with one embodiment of the present invention.
Fig. 9 is a diagram schematically illustrating a preferred structure of a dictionary in accordance with one embodiment of the present invention.
Fig. 10 is a flowchart illustrating steps of a process for determining whether a press and a lift constitute a tap in a method for efficient text entry with a touch screen in accordance with the present invention.
Fig. 11 is a flowchart illustrating steps in step 14 in a method for efficient text entry with a touch screen in accordance with one embodiment of the present invention.
Fig. 12a shows a time consumption comparison between the present invention and the prior art.
Fig. 12b shows another time consumption comparison the present invention and the prior art.

### DETAILED DESCRIPTION

The present invention will be more apparent from the following detailed description of specific embodiments which is to be read in conjunction with the accompanying drawings. Before describing the embodiments in detail, it should be noted that these embodiments are primarily directed to combinations of method steps and device components for inputting text to a terminal device. These device components and method steps are shown at proper positions of the accompanying drawings and indicated at conventional numerals in such a manner that only their details related to understanding the embodiments of the invention are presented in order to avoid obscuring the present disclosure by the details apparent to those of ordinary skill in the art who benefit from the present invention.

As used herein, the terms "left", "right", "upper", "lower", "front", "rear", "first", "second" and so on are intended only to distinguish one entity or action from another without necessarily requiring or implying that these entities actually have such a relationship or that these actions are actually carried out in such an order. In addition, the terms "comprise", "include" or any other variation thereof are intended to cover a non-exclusive inclusion. As such, a process, method, article, or apparatus that comprises a list of features is not necessarily limited only to those features but may include other features not expressly listed or inherent to such process, method, article, or apparatus.

Reference is now made to Fig. 2a, a system for efficient text entry with a touch screen in accordance with the present invention comprises a touch detection module 1, a thread management module 2, a search module 4 and an output module 3.

The touch detection module 1 is configured to detect whether a press on the touch screen or a lift therefrom corresponding to the press occurs, wherein the press and lift constitute a tap gesture. Upon the touch detection module 1 detecting the press, the thread management module 2 will initiate at least one auxiliary thread therefor. The search module 4 then performs a search based on the press, and when the touch detection module 1 detects the lift, a result of the search in the auxiliary thread is output by the output module 3.

In the present invention, when the touch detection module 1 detects another press before the result of the search for the first press is generated in the auxiliary thread, the thread management module 2 initiates an-other auxiliary thread for searching a character corresponding to the second press.

In this way, there are multiple auxiliary threads in the proposed system in order to improve the entry efficiency with the touch screen. The auxiliary threads are referred to with respect to a main thread that is adapted to allocate events to components. These events include detecting whether the press on or lift from the touch screen occurs, initiating the at least on auxiliary thread upon detection of the press, and outputting the entered character resulting from the search carried out in the auxiliary thread upon detecting of the lift. The events may also include rendering events including changing the brightness or color of a specific screen area. The auxiliary thread is adapted to, based on the press on the touch screen, perform the search for the entered character corresponding to the press. The result of the search is output by the output module 3.

In an example useful for understanding the invention, referring to Fig. 2b, the touch detection module 1 may include a detection unit 102, a drive unit 101 and a touch screen control unit 103. The drive unit 101 is configured to apply a drive signal to a drive line in the touch screen. The detection unit 102 is configured to detect a touched (i.e., pressed) location and to inform the touch screen control unit 103 of the touched location. The touch screen control unit 103 is adapted to receive the information about the touch point location from the detection unit 102, convert the information into coordinates and send the coordinates to the search module 4.

In the conventional techniques, for a character entered by the user, a single thread is utilized to handle the corresponding press, lift and search. That is, in such techniques, only when a press and a lift corresponding thereto are detected, a search will be performed in a single thread for an entered character based on a tap constituted by the press and the lift. However, with the dictionary size increasingly expanding, longer time is required for a search carried out in the dictionary, making the response to each tap slower. In contrast, the thread management module 2 is employed in the present invention which can initiate multiple auxiliary threads each for carrying out a search for an entered character corresponding to a respective press. Additionally, entry methods according to different embodiments employ differently structured dictionaries, in which different numbers of auxiliary threads may be initiated for the same press. For example, in a preferred embodiment, a dictionary is divided into multiple sub-dictionaries such that for a single press of the user, tion in order to simultaneously search different sub-dictionaries. This results in a higher search speed and hence better human-computer interaction by allowing the search module 4 to obtain the entered character before the lift occurs.

In another embodiment, the thread management module 2 is further configured to manage multiple auxiliary threads. For example, during simultaneous operation of the multiple auxiliary threads, if the time elapsed since a search is commenced in one of the auxiliary threads exceeds a first threshold, the thread management module 2 may merge this thread with one of the threads initiated subsequently, in order to achieve higher efficiency. In one embodiment, the first threshold may be 100 ms or defined by the user.

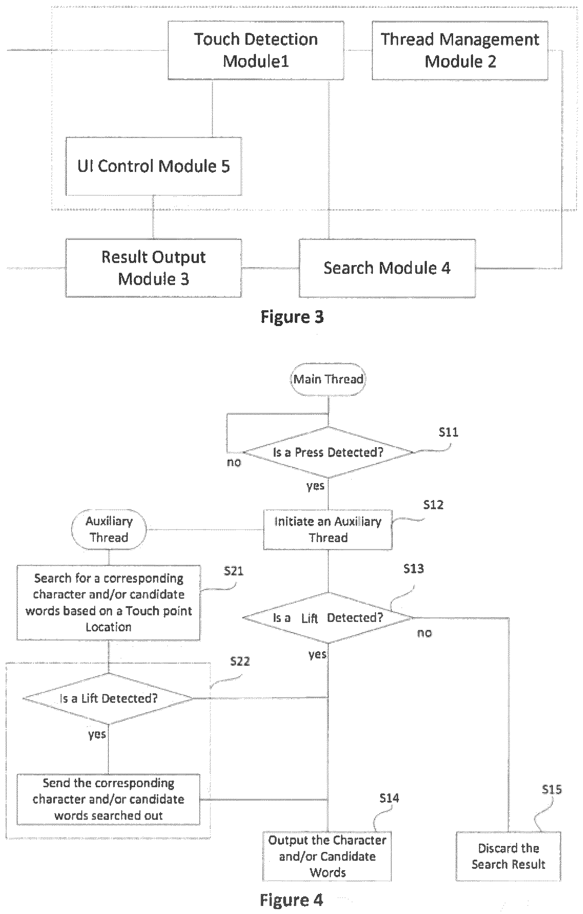

In a preferred embodiment, with reference to Fig. 3, the system may further include a UI control module 5 configured to, when the touch detection module 1 detects the press on the touch screen, change a state of the pressed area, and when the touch detection module 1 detects the lift from the touch screen, restore the original state of the pressed area. The change in the state may be implemented as a change in the brightness or color of the pressed area. In this way, the user may gain an intuitive perception of the entered character and clearly associate the pressed location with the character intended to be entered. Therefore, the present embodiment is not limited to changing the brightness or color of the pressed area because any other method may also be employed as long as it is suitable to distinguish the pressed area from the remaining.

After an auxiliary thread is initiated, the search module 4 performs a search for a character entered by the user based on the currently pressed area. Here, it is to be noted that the search module 4 is adapted to search a local dictionary or a dictionary deployed in a cloud server by means of a communication module (not shown). Herein, the term "touch screen" is intended in a broad sense to refer to any touch screen capable of displaying virtual keyboards with various layouts for various languages and contains characters arranged at predetermined locations with coordinates serving as a basis for the search module 4 to perform a search in the dictionary to obtain a corresponding entered character or acquire corresponding candidate words based on a previous user input.

In the present invention, the output module 3 is configured to output the entered character or candidate words resulting from the search performed by the search module 4 when the touch detection module 1 detects a lift from the touch screen, or discard the entered character or candidate words if no lift is detected by the touch detection module 1. In the present invention, if the press and lift detected by the touch detection module 1 are not of the same tap gesture or if a time interval between them is longer than a predetermined threshold such as, for example, 100 ms, the touch detection module 1 generates a simulated lift signal and sends it to the output module 3 so that the output module 3 obtains the search result from the search module 4 and outputs it.

Referring to Fig. 4, a method for efficient text entry with a touch screen in accordance with one embodiment of the present invention includes a main-thread process and an auxiliary-thread process. The main-thread process includes:
in step S11, detecting, by the touch detection module 1, whether a press on the touch screen occurs;
in step S12, if a press on the touch screen occurs, initiating an auxiliary thread by the thread management module 2;
in step S13, detecting, by the touch detection module 1, whether a lift from the touch screen occurs, and if so, notifying the auxiliary thread and proceeding to step S14; otherwise, proceeding to step S15;
in step S14, if a lift from the touch screen is detected, outputting, by the output module 3, an entered character and/or candidate words resulting from a search carried out in the auxiliary thread; and
in step S15, if no lift from the touch screen is detected, discarding, by the output module 3, the entered character and/or candidate words resulting from the search carried out in the auxiliary thread.

The auxiliary-thread process includes:
in step S21, searching, by the search module 4, the entered character and/or corresponding candidate words based on a pressed area; and
in step S22, upon detection of a lift, sending the entered character and/or candidate words to the output module 3;

In step S11, the touch detection module 1 detects whether there is a press on the touch screen. The touch screen may be a four-wire resistive screen, an acoustic screen, a five-wire resistive screen, an infrared screen or a capacitive screen equipped in a terminal device which may be a portable device such as a mobile phone, a tablet PC or a mobile PC or a terminal unsuitable to be carried such as a TV set, a desktop PC or a set-top box.

In step S12, when a press is detected on the touch screen, an auxiliary thread is initiated. In one example useful for understanding the invention, step S12 may specifically include: creating a Thread object, wherein Looper is employed for message queue processing and an object with a built-in Runnable interface is used as parameters for the creation of the Thread object; during initiation of the auxiliary thread, a start method for the Thread class is invoked to initiate the thread and a Run() method for the Runnable is executed to accomplish relevant necessary tasks.

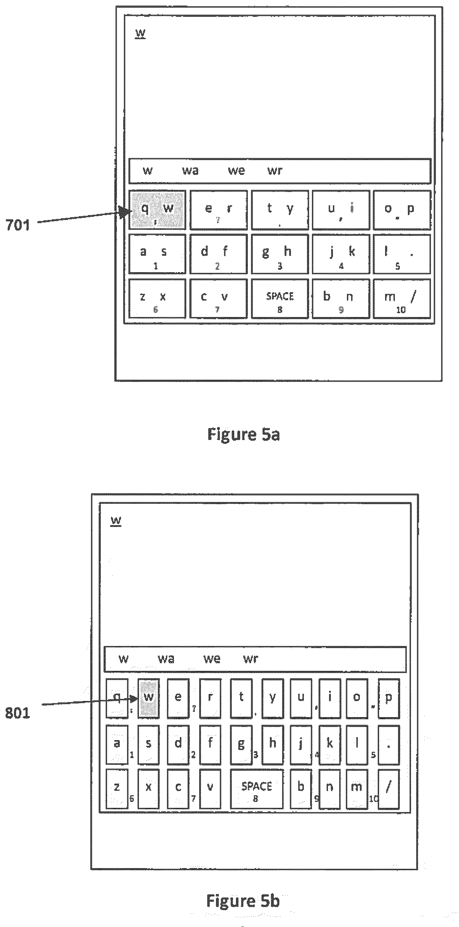

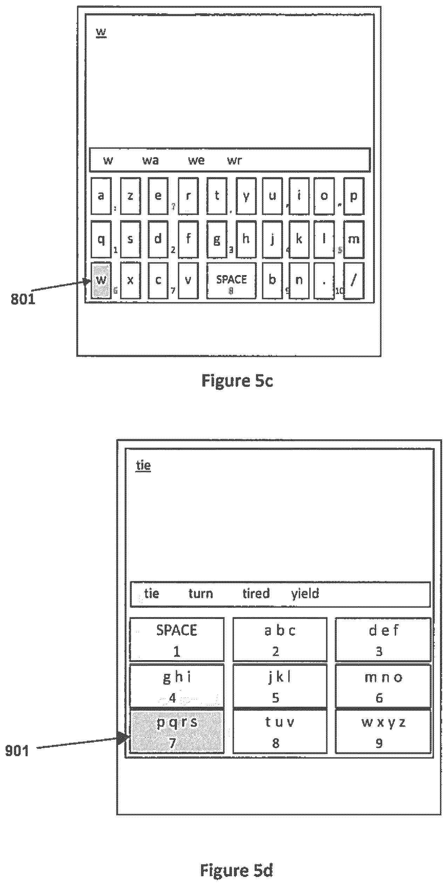

Further, step S12 may also include changing a state of the touched area. With reference to Figs. 5a to 5d, when there is a press on the touch screen, the UI control module 5 may cause a state change in the pressed area. The state change may include an increase in brightness or a color change. Here, the pressed area may specifically refer to the area of a character key in the keyboard displayed on the touch screen. For example, for a keyboard layout shown in Fig. 5a containing keys for the 26 English letters, the numbers and symbols, as well as a space key, in which two or three characters share the same key, when the area of the key shared by the characters "w", "q" and ";" is pressed, the area of this "qw" key 701 (referred to as such because it is shared by the characters "w" and "q") will be highlighted or its color will be changed. For a full QWERTY keyboard as shown in Fig. 5b or a full AZERTY keyboard as shown in Fig. 5c in which each key represents a unique character, with numbers and symbols optionally arranged in the gaps between the keys, when the area of the key for the character "w" is pressed, the location 801 of this character "w" is displayed will be highlighted or its color will be changed. For a commonly-used compact keyboard layout as shown in Fig. 5d, when the area of the key shared by the characters "p", "q", "r", "s" and "7" is pressed, the area of this "pqrs" key 901 (referred to as such because it is shared by the characters "p", "q", "r", "s" and "7") will be highlighted or its color will be changed. The Ul control module 5 is further configured to, based on the keyboard layout used, brighten, darken or change the color of an area of the virtual keyboard displayed on the touch screen that is currently pressed by the used.

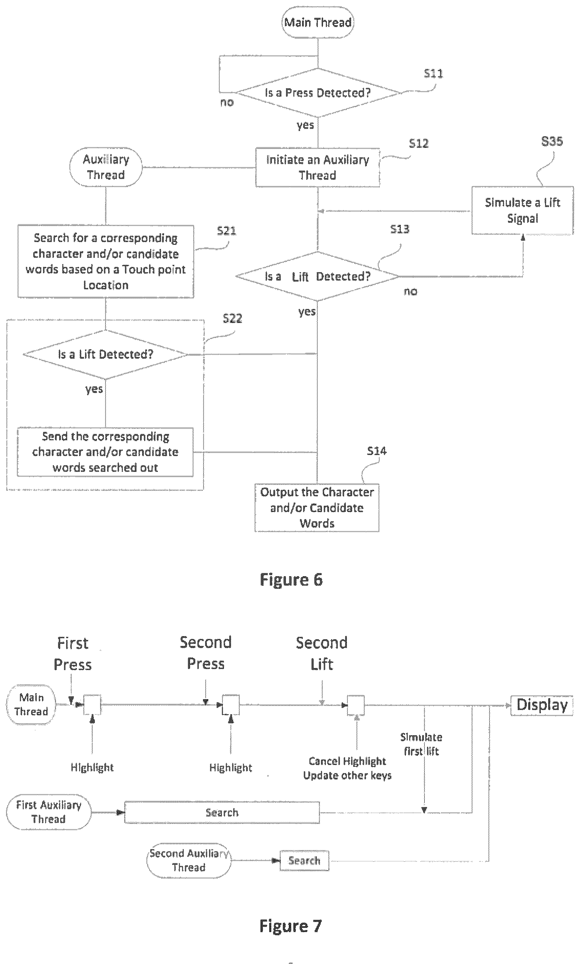

In present invention, with reference to Fig. 6, if there is no lift detected, the main-thread process proceeds to step S35 including: generating a simulated lift signal and returning it to step S13 so that each character and/or candidate words resulting from the search performed based on the user's input is output.

Fig. 7 is a diagram schematically showing a process performed by the main thread and auxiliary threads to handling multiple presses in accordance with the present invention. In case of multi-finger typing or intensive typing by the user, it is possible that after the touch detection module 1 has detected a press (first press) and initiated a first auxiliary thread, another press (second press) is further detected by the touch detection module 1 in the main thread before a lift corresponding to the first press is detected and during a search performed in the first auxiliary thread based on the first press. In this case, after the thread management module 2 initiates a second auxiliary thread, if the touch detection module 1 in the main thread detects a lift corresponding to the second press (second lift) with that corresponding to the first press still being absent, the system may send a lift signal corresponding to the press based on which the search is carried out in the first auxiliary thread to the touch detection module 1. When the touch detection module 1 receives the lift signal, it will determine that a lift corresponding to the press based on which the search is carried out in the first auxiliary thread occurs and constitutes a complete tap gesture together with the press, so that the search module 4 outputs a result from the search carried out in the first auxiliary thread and a result from a search performed in the second auxiliary thread. In some embodiments, the initiation of the first auxiliary thread or the second auxiliary thread may be accompanied with the highlighting of the respective pressed area. In addition, the pressed area will no longer be highlighted when the respective auxiliary thread is ended.

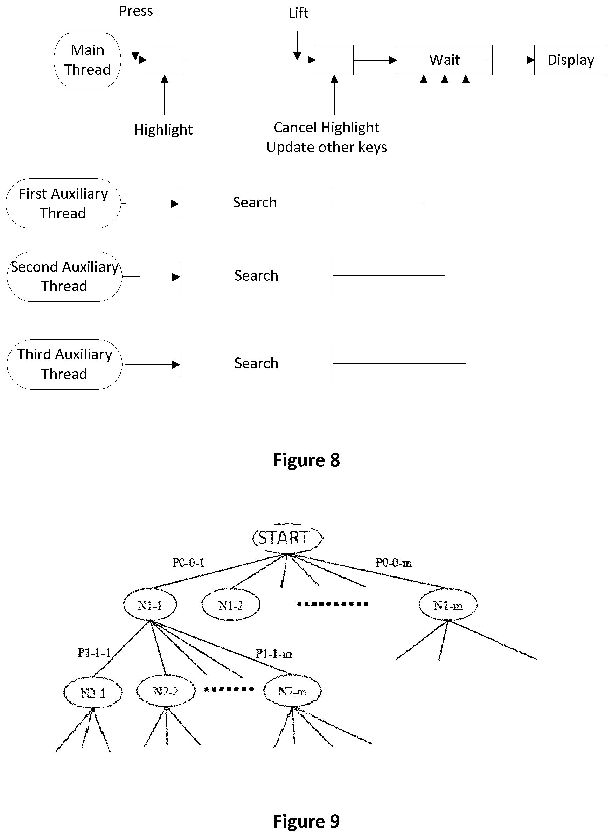

Additionally, referring to Fig. 8, in some embodiments of the proposed method, multiple auxiliary threads may be initiated for the same press, for example, for multiple dictionaries or for the same dictionary. In one embodiment employing the compact keyboard layout as shown in Fig. 5d, when the location of the "abc" key is pressed, the press may correspond to the character "a", "b" or "c". In another embodiment, a system correction process may be conducted based on the user's current input. For example, based on the keyboard layout used, characters corresponding to the key currently pressed by the user and keys adjacent to the pressed key or one or more of the adjacent keys that are arranged along a predetermined direction may be taken as characters corresponding to the user's press. In such cases, in order to achieve faster search and better user experience, the thread management module 2 may initiate an auxiliary thread for each of the multiple characters corresponding to the press. Fig. 8 shows a scenario in which the same press corresponds to three auxiliary threads, i.e., a first auxiliary thread, a second auxiliary thread and a third auxiliary thread, each configured to conduct a search for candidate words based on a combination of the character corresponding to the pressed key with a previous input of the user.

In some embodiments, auxiliary thread(s) may be ended based on the user's subsequent input(s). For example, based on one or more subsequent inputs of the user, a determination may be made, optionally with the aid of the system correction process, that there is no word corresponding to the inputs. At this point, if the user is keeping typing, the system will terminate the corresponding auxiliary thread(s) while maintaining the remainder. Furthermore, for a set of consecutive taps made by the user, i.e., multiple presses in a series, the system may initiate the same number of auxiliary threads each for one of the presses, in order to expedite the search process and improve the user's experience.

In the aforesaid auxiliary-thread process, when a press by the user is detected, the search module 4 searches the dictionary based on the pressed area in order to obtain the character entered by the user and candidate words corresponding to the entered character. The obtained character and the corresponding candidate words are then sent to the output module 3. Here, the dictionary may include a local dictionary and/or a remote dictionary deployed on a cloud server. In one example useful for Understanding the invention, step S21 may include: searching the local dictionary and, if there is no result obtained, then the remote dictionary; or vice versa. In another example useful for understanding the invention, step S21 may include detecting a network state, and if the network state meets a predefined condition, for example, if the network is a WiFi network, searching the remote dictionary. Otherwise, only the local dictionary is searched.

As the search process is generally time-consuming, in some examples useful for understanding the invention, step S22 may further include: upon receiving a signal from the main thread that indicates the detection of a lift, waiting for a first time interval and then sending the search result to the output module 3 by the search module 4. In order to avoid making the user feel a delay, the first time interval may be set to a value that is equal to or less than 60 ms.

In the present invention, step S21 may further include: obtaining the entered character based on the pressed area and obtaining the candidate words by searching the dictionary based on the entered character.

The entered character corresponding to the pressed area may include the character located just in the pressed area or a character determined by the system correction process performed based on the pressed area. In the system correction process, the system may make a reasonable prediction on the currently entered character based on the keyboard layout used as well as on the text that has been entered by the user. For example, when in the Chinese Quanpin mode using the QWERTY keyboard layout as shown in Fig. 5b, if the character "k" is entered following "q", it may be determined based on the principles of the Chinese pinyin system that a typing error may occur because "qk" does not constitute any valid pinyin syllable and that the character intended to be entered by the user may instead be "u" or "i" because among the characters adjacent to "k" i.e., "u", "i", "o", "l", "m", "n", "b" and "j", "u" or "i" can constitute valid pinyin syllables with "q". As a result, a search may be conducted directly based on the result of the correction process, i.e., "qu" or "qi". In addition, the system correction process may be performed based on all the keys adjacent to the pressed key, or on those of the adjacent keys arranged in a predetermined direction or on the user's preference.

Fig. 9 is a structural schematic of the dictionary according to a preferred embodiment in which candidate words are stored in the dictionary in the form of a tree structure. As shown in Fig. 9, each node Ni-1, Ni-2, ..., Ni-m in the tree-structured dictionary represents a character, where i denotes a depth of the node in the tree (i.e., the i-th tier), and therefore, nodes of the i-th tier represent i-th characters in the candidate words; and where m denotes the total number of characters at the tier. For example, as there are 26 letters in the English alphabet, m may be a number not greater than 26. If the dictionary contains words having other symbols, such as "don't", then m may be greater than 26. The nodes in the dictionary are connected by links Pi-j-1, Pi-j-2, ..., Pi-j-m, where i-j indicates that the links connect the parent nodes Ni-j. A sequence of nodes in a path leading from the root node down to a certain node is called a character sequence of the node (or the path). If a character at a node is the last character of a candidate word in the dictionary, then it is referred to as a word node. A path that does not exist indicates that there is no character sequence for the path in the dictionary. For example, nodes corresponding to the candidate English word "apple" are, sequentially from the root node downward, "a", "p", "p", "1" and "e". The node for the first letter "a" in the candidate word "apple" is at the first tier of the tree, and that for the second letter "p" is at the second tie. The last letter "e" is the word node for the character sequence "apple". Such a tree-structured dictionary allows quickly verifying whether a particular sequence of letters forms a word in the dictionary and obtaining nodes corresponding to the word.

Each word node may correspond to a word object which, however, has a data structure independent of that of the dictionary. According to some embodiments, a word object may carry the following information: a statistical frequency, related words, context rules, alternative forms and the like of the word. The statistical frequency may result from statistics of commonly entered words or of the user's input preference and may be represented by a numerical value such as a number in the range from 1 to 8, where 8 indicates the highest frequency and 1 denotes the lowest. Statistical frequencies may serve as a critical criterion for prioritization of candidate words. With other criteria being precluded, the more frequently a word is used, the higher a priority it will have.

The related words may include, for example, plural form(s) if the word is a noun, different tense forms if the word is a verb, parts of speech of the word, and so on. For instance, related words of the English word "jump" may include "jumps", "jumping" and "jumped". In particular, according to some embodiments not covered by the claims, a list of the related words may be accomplished by a pointer. That is, a word object may point to other word objects related thereto. Obtaining related words as a result of the search performed in the dictionary facilitates the user to quickly select a related word for a given word. For example, when "jump" appears as a candidate word, the user may make a predefined motion (e.g., a downward swipe from the location of the word) to cause the system to display all its related words and then select one therefrom. According to some examples useful for understanding the invention; obtaining the candidate words based on the entered character may further comprise, based on the candidate words, obtaining words related thereto.

Further, the context rules may include context-related information about the word such as commonly-used phrases containing the word, as well as grammatical rules. For example, context rules for the word "look" may include the commonly-used phrases "look at", "look forward to", "look for", etc., and those for the word "am" may include "I am" and so on. As another example, context rules for the word "of' may include the grammatical rule that the word following it should be a noun or a gerund. With such information, the system may smartly determine priorities for the candidate words based on the context. According to some examples useful for understanding the invention, in step S21, obtaining the candidate words based on the entered character may further comprise obtaining the candidate words corresponding to the entered character based on the context.

Further, the context rules may also be applied to the related words. For example, when the context rules contain "look forward to", even if the user enters "looking", "look forward to" may be obtained as "looking" is a related word of "look". The alternative forms are certain related forms of the word. For example, "asap" is an abbreviation of "as soon as possible". So, if the user enters "asap", the system can automatically correlate it to "as soon as possible". That is to say, "as soon as possible" is an alternative form of the word object "asap". In another example, "don't" may be configured as an alternative form of "dont", and if the user enters "dont", it will be automatically corrected to "don't". In fact, the word object "dont" here functions as an index. If a word has an alternative form, the candidate words module will output the alternative form with higher priority.

Based on the above-defined dictionary structure and the data structure of each word object (i.e., the statistical frequency, related words, context rules, alternative forms, etc.), in step S21, searching the dictionary based on the entered character and thereby obtaining the candidate words may further comprises: during the search for the character entered by the user corresponding to the press by the search module 4, predicting a subsequent press. For example, the search performed for the first press may result in "s", and the search module 4 may predict the next (second) press that does not occur yet. For example, based on the result of the search performed in the dictionary, the search module 4 may predict "save", "surprise", "see" and the like as the words most possibly intended by the user. Based on this prediction, the search module 4 may obtain the predicted characters corresponding to the next pressed area, i.e., "a", "u", "e", etc. As such, after the touch detection module 1 detects the next press, the search module 4 may first search the prediction results for the previous press. This can expedite the search process, shorten the time required for displaying candidate words and enhance the human-computer interaction.

In step S13, the touch detection module 1 detects whether there is a lift from the touch screen. A complete tap gesture consists of a press and a lift. Conventionally, only when a lift is detected, will a search be started for a character or candidate words corresponding to the pressed area. In contrast, according to the present invention, upon detection of a press, an auxiliary thread will be immediately initiated to perform a search, and it is determined in the main thread whether there occurs a lift. If the determination is positive, a result of the search is output. In this way, the user's entry speed is greatly enhanced and better human-computer interaction experience is achieved.

When the lift corresponding to the press is detected, the UI control module 5 changes the state of the area that has been changed due to the detection of the press back to the original, indicting the completion of the tap gesture consisting of the press and lift. For example, the area that has been highlighted is not highlighted any more, or the color of the area that has been change is restored as before the change. In addition, in order to give the user a feeling of smoothness and hence better experience, the output module 3 outputs the result of the search at the time when the highlighted area is not highlighted any more or when the area that have experienced a change in color is restored to the original color. In another embodiment in which a search process is merged with a subsequent search process, a string resulting from the search process is not output upon the cancellation of the highlighting or restoration to the original color for this press but is output together with a string resulting from the subsequent search process upon the cancellation or restoration for the next press. In this case, while there is a delay in the displaying of the entered string, the displaying of the candidate words and hence the user's entry speed are not affected.

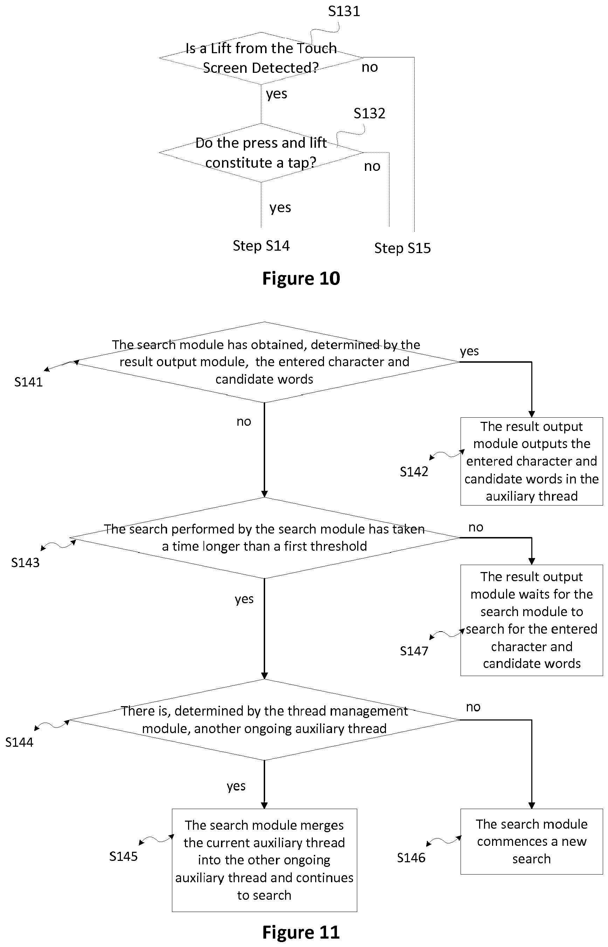

In the present invention, step S13 may further include determining whether the press and the lift constitute a tap. Referring to Fig. 10, this specifically includes:
in step S131, detecting by the touch detection module 1 whether there is a lift from the touch screen; and
in step S132, if there is a lift from the touch screen, determining by the touch detection module 1 whether the press and the lift constitute a tap.

Step S132 includes detecting whether there is a difference between the locations where the press and lift occur or whether a time interval between the press and lift is longer than a predetermined value. It is possible for a swipe to occur during the press. So, even though the system has detected the press and lift, if the locations where they occur are different, for example, corresponding to different keys, or if the time interval between them is not within a predetermined range that justifies them as constituting a tap, even when they occur at the location of the same key, they are not considered to form a tap.

When the press and lift constitute a tap, step S14 is performed to return an indication of the occurrence of the lift from the touch screen. With reference to Fig. 5b, when a press on the key "w" and a subsequent lift from this key are detected by the touch detection module 1, with a time interval between the press and lift lying within a range justifying the determination that they constitute a tap, an indication of the occurrence of the lift is returned.

If the press and lift does not constitute a tap, step S15 is performed to return an indication of the absence of the lift from the touch screen. With reference to Fig. 5b, if the "w" key is pressed and the lift occurs at the "t" key, then they do not constitute a tap. In some embodiments, while the press and lift occur at the same key, for example, "w", if a time interval between them is out of a range that justifies them as constituting a tap, an indication of the absence of the lift is returned.

If the lift is not detected from the touch screen, step S15 or S35 is performed to return an indication of the absence of the lift.

In some embodiments, although the touch detection module 1 has detected the press, as the touch detection module 1 fails to detect the lift, for example, because the user presses the key such as "w" for a long time, an indication of the absence of the lift is returned. Additionally, with reference to Fig. 6, when the touch detection module 1 detects a first press, a second press and a lift corresponding to the second press but not a lift corresponding to the first press, step S35 will be performed to send a signal representing a lift corresponding to the first press to the touch detection module 1 so that the output module 3 outputs both the results of searches performed for the first and second presses.

In general terms, when the time interval between the press and lift is about 100 ms, it is considered that the press and lift constitute a tap gesture. However, it is a matter of course that the time interval may vary with the touch screen used and can be configured by the manufacturer of the terminal device before factory or by the user according to his/her entry preference or typing speed. Nevertheless, the configured time interval must be equal to or greater than a minimum that allows the press and lift to constitute a tap gesture. In addition, in order to distinguish a tap from a long press, the time interval between the press and lift should not be longer than a certain value. Further, the time interval between the press and lift may also be configured according to a sensitivity of the touch screen.

Referring to Fig. 11, in one embodiment of the present invention, step S14 may specifically include the following steps.

In S141, the output module 3 determines whether the search module 4 has obtained the entered character and candidate words from the search performed in the auxiliary thread;

In S142, if the search module 4 has obtained the entered character and candidate words, the output module 3 outputs the entered character and candidate words.

In S143, if the search module 4 does not obtain the entered character and candidate words, the output module 3 determines whether the search performed by the search module 4 has taken a time that is longer than a first threshold.

In S144, if the time taken by the search is longer than the first threshold, the thread management module 2 determines whether there is another ongoing auxiliary thread;

In S145, if there is another ongoing auxiliary thread, the search module 4 merges the auxiliary thread and the other ongoing auxiliary thread into a new search;

In S146, if there is no any other ongoing auxiliary thread, the search module 4 commences a new search;

In S147, if the time taken by the search does not exceed the first threshold, the output module 3 does nothing and the search module 4 continues the search for the entered character and candidate words.

According to an embodiment of the present invention, if the search in the auxiliary thread is not completed after the lift has been detected, the output module 3 will determine whether the search has taken a time exceeding the first threshold, i.e., a maximum search time allowed by the system. If the determination is positive, it is considered that the search is not successuful, and if there are other ongoing auxiliary threads, the search in the specific auxiliary thread may be merged with a search in an immediately subsequent one of the other ongoing auxiliary threads so that the search module 4 can perform a new search based on the two characters of the pre-merged searches in order to accelerate the search process. The first threshold may be set to 50-80 ms.

It is to be noted that the systems and methods described herein are applicable to languages other than English as well as to other keyboards. The term "keyboard" is defined in a broad sense to include any input means with defined areas, including, but not limited to, physical, mechanical keyboards, physical, inductive keyboards and virtual keyboards on touchscreen displays. While the embodiments of the invention have been described in the context of virtual keyboards on touchscreen displays, one of ordinary skill in the art will appreciate that the methods and devices mentioned herein may also be used in physical keyboards.

The system and method according to the present invention offer the following benefits over the prior art:
First, with reference to Figs. 12a and 12b, depictions of comparisons between technical effects of the present invention and the prior art, a time interval between a press and lift according to the prior art is generally 100 ms, and a search is carried out only after the lift is detected. That is, the user has to expect a result after the search following the lift is completed. As such, subject to limitations on the speed at which the search is performed in a related database or even to limitations on the networking speed, the user often feels a pause or a delay. In contrast, according to the present invention, immediately after a press is detected, an auxiliary thread is initiated to perform a search, and a result of the search is made available when a lift is detected. In such a way, the user can obtain the result in a timely way. According to another embodiment, with reference to Fig. 10b, as the search is performed synchronously with the gesture made by the user on the touch screen, even if the search has taken a time several times as required normally due to a large database space or slow networking, the user would still feel that the entry is smooth. With the present invention, for each tap made by the user, an increase of 40-50% in the entry speed can be achieved, allowing faster entry and better human-computer interaction. In addition, it is to be noted that, compared to the prior art in which 4.29% of tap gestures takes more than 150 ms, the present invention significantly decreases the proportion to 2.5% and hence further improve the user's entry experience.
Second, from the view of point of memory usage, a large number of caches are used in the prior art in order to speed up the response to each tap, but no significant acceleration is observed. With the present invention, the number of required caches and hence the required memory space can be reduced, resulting in enhancements in the overall system operation.

In this specification, the invention has been described with reference to specific embodiments thereof. However, it is apparent that various modifications and changes may be made. Accordingly, the specification and drawings are to be regarded as illustrative rather than restrictive.

## Claims

1. A system for efficient text entry to a terminal device comprising a touch screen, the system comprising:
a touch detection module (1), configured to detect whether a press on the touch screen or a lift therefrom occur, wherein the touch detection module (1) is configured to, upon detecting the lift, determine whether the press and the lift constitute a tap by determining whether the press and the lift respectively occur on an area corresponding to the same character and whether a time interval between the press and the lift is within a predetermined time interval;
a thread management module (2), configured to maintain a main thread, initiate an auxiliary thread for the press when it is detected by the touch detection module, and terminate the auxiliary thread when the touch detection module (1) detects the lift;
a search module (4), configured to, in the auxiliary thread, based on an area where the press occurs, perform a search in a dictionary for an entered character and/or candidate words corresponding to the area; and
an output module (3), configured to output the entered character and/or candidate words resulting from the search performed by the search module (4) upon the touch detection module (1) determining that the press and the lift constitute a tap, and discard the result of the search performed by the search module (4) if the touch detection module (1) determines that the detected press and the lift do not constitute a tap,
**characterized in that** the touch detection module (1) is further configured to, in response to successively detecting a first press, a second press, and a lift corresponding to the second press before a lift corresponding to the first press is detected, generate a simulated lift signal for the first press and send it to an auxiliary thread initiated by the thread management module (2) for the first press.

2. The system of claim 1, wherein the search module (4) is configured to obtain the result of the search further based on previous input content before said press.

3. The system according to claim 1, wherein the dictionary contains a plurality of sub-dictionaries or branches, wherein the thread management module (2) is configured to, based on the plurality of sub-dictionaries or branches, initiate a plurality of auxiliary threads for the single press, in which respective searches are performed in a simultaneous way, each in at least one of the plurality of sub-dictionaries or branches.

4. The system according to claim 1, wherein the area where the press occurred corresponds to a plurality of characters and the thread management module (2) is configured to initiate a plurality of auxiliary threads in each of which a search is performed for at least one of the plurality of characters.

5. The system according to claim 4, wherein the search module (4) is configured to determine whether any of the characters corresponding to the area where the press occurred is invalid, and the thread management module (2) is configured to, in response, terminate the at least one auxiliary thread activated for the specific character.

6. The system according to claim 1, wherein the thread management module (2) is configured to, when a plurality of auxiliary threads coexist and if a search performed by the search module (4) in one of the auxiliary threads takes a time that is longer than a first threshold, merge the specific auxiliary thread with a subsequent one of the auxiliary threads.

7. The system according to claim 1, wherein performing the search for the entered character corresponding to the area where the press occurs comprises: obtaining a character assigned to a key located in the area or obtaining a corresponding character from a system correction process carried out based on the area.

8. The system according to claim 1, further comprising a UI control module configured to, upon the touch detection module (1) detecting the press on the touch screen, change a state of the area where the press occurs, and upon the touch detection module (1) detecting the lift from the touch screen, restore the area to its original state.

9. A method for efficient text entry to a terminal device comprising a touch screen, the method comprising:
a main-thread process for handling interactions of a user with a touch screen and for determining whether to initiate an auxiliary thread; and
at least one auxiliary-thread process for, based on an area where a press detected by the main-thread process occurs, performing a search in a dictionary for an entered character and/or candidate words and for delivering a result of the search to the main-thread process in the event that a lift corresponding to the press is detected,
wherein, the main-thread process comprises:
detecting (S11) whether a press on the touch screen occurs;
upon detecting the press, initiating (S12) the at least one auxiliary thread for the press;
detecting (S13, S22) whether a lift from the touch screen occurs;
upon detecting the lift, determining (S132) whether the press and the lift constitute a tap by determining whether the press and the lift respectively occur on an area corresponding to the same character and whether a time interval between the press and the lift is within a predetermined time interval; and
upon determining that the press and the lift constitute a tap, obtaining the entered character and/or candidate words as the result of the search performed for the press from the at least one auxiliary thread process and outputting (S14) the result of search, and if determining that the press and the lift do not constitute a tap, discarding (S15) the result; wherein the at least one auxiliary-thread process obtains the result of the search further based on previous input content,
**characterized in that** the main-thread process further comprises, in response to successively detecting a first press, a second press, and a lift corresponding to the second press before a lift corresponding to the first press is detected, generating (S35) a simulated lift signal for the first press and send it to an auxiliary thread process initiated for the first press.

10. The method according to claim 9, wherein a plurality of auxiliary threads are initiated for the single press, in each of which, a search is performed in one of at least one subdictionary or branch of the dictionary or for one of at least one character corresponding to an area where the press occurs.

11. The method according to claim 10, wherein in the event that the auxiliary-thread process determines any character corresponding to the press is invalid, the main-thread process terminates the at least one auxiliary thread activated for the specific character.

12. The method according to claim 9, wherein before the character and/or candidate words results from the search performed for the press, it is determined whether a time the search has taken exceeds a first threshold, and if the time exceeds the first threshold and there is another ongoing auxiliary thread, the search is merged with a search performed in the other auxiliary thread into a new search, or if there is no any other ongoing auxiliary thread, a new search is commenced.

13. The method according to claim 9, wherein performing the search in the dictionary for the entered character corresponding to the area where the press occurs comprises: obtaining a character assigned to a key located in the area or obtaining a corresponding character from a system correction process carried out based on the area.

14. The method according to claim 9, further comprises: upon detecting the press on the touch screen, changing a state of the area where the press occurs, and upon detecting the lift, restoring the area to its original state.

## Patentansprüche

1. System zur effizienten Texteingabe in einem Endgerät mit einem Touchscreen, das System umfasst:
ein Berührungserkennungsmodul (1), das konfiguriert ist, um zu erkennen, ob auf dem Touchscreen ein Drücken oder ein Heben davon erfolgt, wobei das Berührungserkennungsmodul (1) konfiguriert ist, um bei der Erkennung eines Hebens festzulegen, ob das Drücken und das Heben ein Tippen bilden, indem bestimmt wird, ob das Drücken und das Heben jeweils in einem Bereich erfolgen, der demselben Zeichen entspricht, und ob ein Zeitintervall zwischen dem Drücken und dem Heben innerhalb eines vorbestimmten Zeitintervalls liegt;
ein Thread-Management-Modul (2), das konfiguriert ist, um einen Haupt-Thread beizubehalten und einen Hilfs-Thread für das Drücken zu initiieren, wenn das Drücken vom Berührungserkennungsmodul erkannt wird, und um den Hilfs-Thread zu beenden, wenn das Berührungserkennungsmodul (1) das Heben erkennt;
ein Suchmodul (4), das im Hilfs-Thread auf der Grundlage eines Bereiches konfiguriert ist, in dem das Drücken erfolgt, um eine Suchanfrage im Wörterbuch bezüglich eines eingegebenen Zeichens und/oder der Kandidaten-Wörter auszuführen, die dem Bereich entsprechen, und
ein Ausgangsmodul (3), das konfiguriert ist, um das eingegebene Zeichen und/oder die Kandidaten-Wörter auszugeben, die aus der vom Suchmodul (4) ausgeführten Suchanfrage erfolgen, wenn das Berührungserkennungsmodul (1) feststellt, dass ein Tippen durch das Drücken und das Heben gebildet wird, und dass das vom Suchmodul (4) ausgeführten Suchergebnis verworfen wird, wenn das Berührungserkennungsmodul (1) feststellt, dass das erkannte Drücken und das Heben keine Tippen bilden,
**dadurch gekennzeichnet,**
**dass** das Berührungserkennungsmodul (1) weiterhin konfiguriert ist, um, als Reaktion auf die aufeinanderfolgende Erkennung eines ersten Drückens, eines zweiten Drückens und eines dem zweiten Drücken entsprechenden Hebens, bevor ein dem ersten Drücken entsprechendes Heben erkannt wird, um ein simuliertes Hebesignal für das erste Drücken zu generieren und es zum einem vom Thread-Management-Modul (2) initiierten Hilfs-Thread für das erste Drücken zu schicken.

2. System nach Anspruch 1, wobei das Suchmodul (4) konfiguriert ist, um das Suchergebnis zu erhalten, das weiterhin auf dem vorigen eingegebenen Inhalt vor dem obigen Drücken basiert.

3. System nach Anspruch 1, wobei das Wörterbuch eine Vielzahl von Teilwörterbüchern oder Zweigen umfasst, wobei das Thread-Management-Modul (2) konfiguriert ist, um aufgrund der Vielzahl von Teilwörterbüchern oder Zweigen eine Vielzahl von Hilfs-Threads für das einzelne Drücken zu initiieren, wobei jede Suchanfrage auf einer gleichzeitigen Weise jeweils in mindestens einem der mehreren Teilwörterbüchern oder Zweigen ausgeführt wird.

4. System nach Anspruch 1, wobei der Bereich, in dem das Drücken erfolgt, einer Vielzahl von Zeichen entspricht und das Thread-Management-Modul (2) konfiguriert ist, um eine Vielzahl von Hilfs-Threads zu initiieren, in denen jeweils eine Suchanfrage bezüglich mindestens eines von der Vielzahl von Zeichen ausgeführt wird.

5. System nach Anspruch 4, wobei das Suchmodul (4) konfiguriert ist, um festzustellen, ob irgendein Zeichen, das dem Bereich entspricht, in dem das Drücken erfolgt, ungültig ist, und das Thread-Management-Modul (2) als Reaktion darauf konfiguriert ist, um als Reaktion den/die mindestens einen für das bestimmte Zeichen aktivierten Hilfs-Thread(s) zu beenden.

6. System nach Anspruch 1, wobei das Thread-Management-Modul (2) konfiguriert ist, dass, wenn eine Vielzahl von Hilfs-Threads gleichzeitig existieren und falls die Zeit einer vom Suchmodul (4) ausgeführten Suchanfrage in einem der Hilfs-Threads länger als die erste Schwellenwert dauert, wird der bestimmte Hilfs-Thread mit einem von der nachfolgenden Hilfs-Threads zusammengeschlossen.

7. System nach Anspruch 1, wobei das Ausführen der Suchanfrage bezüglich des eingegebenen Zeichens, das dem Bereich entspricht, in dem das Drücken erfolgt, umfasst: Erhalten eines Zeichens, welches in einer in einem Bereich befindlichen Taste zugeordnet wird, oder Erhalten eines entsprechenden Zeichens aus einem Systemkorrekturprozess, der basierend auf dem Bereich ausgeführt wird.

8. System nach Anspruch 1, das weiterhin ein UI-Steuermodul umfasst, das konfiguriert ist, um den Zustand des Bereiches zu ändern, in dem das Drücken erfolgt, wenn das Berührungserkennungsmodul (1) das Drücken auf dem Touchscreen erkennt, und um den Bereich wieder in seinen ursprünglichen Zustand wiederherzustellen, wenn im Berührungserkennungsmodul (1) das Heben aus dem Touchscreen erkannt wird.

9. Verfahren zur effizienten Texteingabe an einem Endgerät mit einem Touchscreen, das Verfahren umfasst:
Einen Haupt-Thread-Prozess, welcher für die Behandlung der Interaktionen durch einen Benutzer mit einem Touchscreen angewendet wird und bestimmt, ob ein Hilfs-Thread zu initiieren ist; und
zumindest einen Hilfs-Thread-Prozess, aufgrund eines Bereiches, in dem ein von dem Haupt-Thread-Prozess erkanntes Drücken erfolgt, zur Ausführung einer Suchanfrage in einem Wörterbuch bezüglich eines eingegebenen Zeichens und/oder der Kandidatenwörter und zur Lieferung eines Suchergebnisses an den Haupt-Thread-Prozess angewendet wird, falls ein dem Drücken entsprechendes Heben erkannt wird,
wobei der Haupt-Thread-Prozess aufweist:
Erkennen (S11), ob ein Drücken auf dem Touchscreen erfolgt;
Initiieren (S12) des mindestens einen der Hilfs-Threads für das Drücken, wenn das Drücken erkannt wird;
Erkennen (S13, S22), ob ein Heben vom Touchscreen erfolgt;
Festlegen (S132), ob das Drücken und das Heben ein Tippen bilden, wenn das Heben erkannt wird;
durch das Festlegen, ob das Drücken und das Heben jeweils in einem demselben Zeichen entsprechenden Bereich erfolgen, und ob ein Zeitintervall zwischen dem Drücken und dem Heben innerhalb eines vorbestimmten Zeitintervalls liegt; und Erhalten desselben eingegebenen Zeichens und/oder der Kandidatenwörter als das Suchergebnis, die für das Drücken von dem mindestens einen Hilfs-Threads-Prozess ausgeführt wird, und Ausgeben (S14) des Suchergebnisses, wenn festgelegt wird, dass das Drücken und das Heben ein Tippen bilden, und Verwerfen des Ergebnisses (S15), falls es festgelegt wird, dass das Drücken und das Heben kein Tippen bilden, wobei mindestens ein Hilfs-Threads-Prozess das Suchergebnis weiterhin aufgrund des vorigen Eingabeinhalts erhält, **dadurch gekennzeichnet, dass** der Haupt-Thread-Prozess weiterhin umfasst, als Reaktion auf die aufeinanderfolgende Erkennung eines ersten Drückens, eines zweiten Drückens und eines dem zweiten Drücken entsprechenden Hebens, bevor ein dem ersten Drücken entsprechendes Heben erkannt wird, Erzeugen (S35) eines simulierten Hebesignals für das erste Drücken und Schicken es an einem Hilfs-Threads-Prozess, das für das erste Drücken initiiert wird.

10. Verfahren nach Anspruch 9, wobei eine Vielzahl von Hilfs-Threads für das einzelne Drücken initiiert wird, in denen jeweils eine Suchanfrage in einem der mindestens einen der Teilwörterbücher oder Zweige der Wörterbücher ausgeführt wird oder nach einem von mindestens einem Zeichen ausgeführt wird, das/die einem Bereich entspricht/entsprechen, in dem das Drücken erfolgt.

11. Verfahren nach Anspruch 10, wobei für den Fall, wenn der Hilfs-Thread-Prozess feststellt, dass irgendein dem Drücken entsprechenden Zeichen ungültig ist, beendet der Haupt-Thread-Prozess zumindest einen Hilfs-Thread, der für das bestimmte Zeichen aktiviert wird.

12. Verfahren nach Anspruch 9, wobei festgelegt wird, bevor das Zeichen und/oder die Kandidatenwörter sich aus der für das Drücken ausgeführten Suchanfrage ergeben, ob eine für die Suchanfrage genommene Zeit einen ersten Schwellenwert überschreitet, und wenn die Zeit den ersten Schwellenwert überschreitet und ein anderer laufender Hilfs-Thread vorhanden ist, wird die Suchanfrage mit einer Suchanfrage, die in dem anderen Hilfs-Thread ausgeführt wird, zu einer neuen Suchanfrage zusammengeschlossen, oder wenn es keinen anderen laufenden Hilfs-Thread gibt, wird eine neue Suchanfrage begonnen.

13. Verfahren nach Anspruch 9, wobei das Ausführen der Suchanfrage im Wörterbuch bezüglich des eingegebenen Zeichens, das dem Bereich entspricht, in dem das Drücken erfolgt, umfasst: Erhalten eines Zeichens, das einer in dem Bereich befindlichen Taste zugeordnet wird, oder Erhalten eines entsprechenden Zeichens aus einem Systemkorrekturprozess, der basierend auf dem Bereich ausgeführt wird.

14. Verfahren nach Anspruch 9, weiterhin umfasst: Änderung eines Zustands des Bereiches, wenn das Drücken auf dem Touchscreen erkannt wird, in dem das Drücken erfolgt und Wiederherstellung des Bereiches zu seinem ursprünglichen Zustand, wenn das Heben erkannt wird.

## Revendications

1. Système d'entrée de texte efficace dans un appareil terminal comprenant un écran tactile, le système comprenant:
un module de détection tactile (1), configuré pour détecter si une pression sur l'écran tactile ou un soulèvement de celui-ci se produit, dans lequel le module de détection tactile (1) est configuré pour, lors de détecter le soulèvement, déterminer si la pression et le soulèvement constituent une tape en déterminant si la pression et le soulèvement se produisent respectivement sur une zone correspondante à un même caractère et si un intervalle de temps entre la pression et le soulèvement est dans un intervalle de temps prédéterminé;
un module de gestion de thread (2), configuré pour maintenir un thread principal, lancer un thread auxiliaire pour la pression lorsqu'elle est détectée par le module de détection tactile, et terminer le thread auxiliaire lorsque le module de détection tactile (1) détecte le soulèvement;
un module de recherche (4), configuré pour, dans le thread auxiliaire, en fonction d'une zone où la pression se produit, réaliser une recherche dans un dictionnaire pour un caractère entré et/ou des mots candidat correspondant à la zone; et
un module de sortie (3), configuré pour sortir le caractère entré et/ou les mots candidat résultant de la recherche réalisée par le module de recherche (4) lorsque le module de détection tactile (1) détermine que la pression et le soulèvement constituent une tape, et écarter le résultat de la recherche réalisée par le module de recherche (4) si le module de détection tactile (1) détermine que la pression détectée et le soulèvement ne constituent pas une tape,
**caractérisé en ce que**,
le module de détection tactile (1) est en outre configuré pour, en réponse à une détection successive d'une première pression, une deuxième pression, et un soulèvement correspondant à la deuxième pression avant qu'un soulèvement correspondant à la première pression soit détecté, générer un signal de soulèvement simulé pour la première pression et l'envoyer à un thread auxiliaire lancé par le module de gestion de thread (2) pour la première pression.

2. Le système de la revendication 1, dans lequel le module de recherche (4) est configuré pour obtenir le résultat de la recherche en outre en fonction d'un contenu d'entrée précédent avant ladite pression.

3. Le système selon la revendication 1, dans lequel le dictionnaire contient une pluralité de sous-dictionnaires ou branches, dans lequel le module de gestion de thread (2) est configuré pour, en fonction de la pluralité de sous-dictionnaires ou branches, lancer une pluralité de threads auxiliaires pour la seule pression, dans lesquels des recherches respectives sont réalisées de manière simultanée, chacune dans au moins un de la pluralité de sous-dictionnaires ou branches.

4. Le système selon la revendication 1, dans lequel la zone où la pression qui s'est produit correspond à une pluralité de caractères et le module de gestion de thread (2) est configuré pour lancer une pluralité de threads auxiliaires dans chacun desquels une recherche est réalisée pour au moins un de la pluralité de caractères.

5. Le système selon la revendication 4, dans lequel le module de recherche (4) est configuré pour déterminer si un des caractères correspondants à la zone où la pression s'est produit est invalide, et le module de gestion de thread (2) est configuré pour, en réponse, terminer l'au moins un thread auxiliaire activé pour le caractère spécifique.

6. Le système selon la revendication 1, dans lequel le module de gestion de thread (2) est configuré pour, lorsqu'une pluralité de threads auxiliaires coexistent et si une recherche réalisée par le module de recherche (4) dans un des threads auxiliaires prend plus de temps qu'un premier seuil, fusionner le thread auxiliaire spécifique avec un suivant des threads auxiliaires.

7. Le système selon la revendication 1, dans lequel la réalisation de la recherche pour le caractère entré correspondant à la zone où la pression se produit comprend: obtenir un caractère attribué à une clé située dans la zone ou obtenir un caractère correspondent d'un processus de correction de système effectué en fonction de la zone.

8. Le système selon la revendication 1, comprenant en outre un module de contrôle d'UI configuré pour, lorsque le module de détection tactile (1) détecte la pression sur l'écran tactile, modifier un état de la zone où la pression se produit, et lorsque le module de détection tactile (1) détecte le soulèvement de l'écran tactile, restaurer la zone à son état d'origine.

9. Procédé d'entrée de texte efficace dans un appareil terminal comprenant un écran tactile, le procédé comprenant:
un processus de thread principal pour gérer des interactions d'un utilisateur avec un écran tactile et pour déterminer s'il faut lancer un thread auxiliaire; et
au moins un processus de thread auxiliaire pour, en fonction d'une zone où une pression détectée par le processus de thread principal se produit, réaliser une recherche dans un dictionnaire pour un caractère entré et/ou des mots candidat et pour fournir un résultat de la recherche au processus de thread principal dans le cas où un soulèvement correspondant à la pression est détecté,
dans lequel, le processus de thread principal comprend:
détecter (S11) si une pression sur l'écran tactile se produit;
lors de détecter la pression, lancer (S12) l'au moins un thread auxiliaire pour la pression;
détecter (S13, S22) si un soulèvement de l'écran tactile se produit;
lors de détecter le soulèvement, déterminer (S132) si la pression et le soulèvement constituent une tape en déterminer si la pression et le soulèvement se produisent respectivement dans une zone correspondante à un même caractère et si un intervalle de temps entre la pression et le soulèvement est dans un intervalle de temps prédéterminé; et
lors de déterminer que la pression et le soulèvement constituent une tape, obtenir le caractère entré et/ou les mots candidat comme le résultat de la recherche réalisée pour la pression de l'au moins un processus de thread auxiliaire et sortir (S14) le résultat de recherche, et s'il est déterminé que la pression et le soulèvement ne constituent pas une tape, écarter (S15) le résultat; dans lequel l'au moins un processus de thread auxiliaire obtient le résultat de la recherche en outre en fonction d'un contenu d'entrée précédent,
**caractérisé en ce que**,
le processus de thread principal comprend en outre, en réponse à une détection successive d'une première pression, une deuxième pression, et un soulèvement correspondant à la deuxième pression avant qu'un soulèvement correspondant à la première pression soit détecté, générer (S35) un signal de soulèvement simulé pour la première pression et l'envoyer à un processus de thread auxiliaire lancé pour la première pression.

10. Le procédé selon la revendication 9, dans lequel une pluralité de threads auxiliaires sont lancés pour la seule pression, dans chacun desquels, une recherche est réalisée dans un d'au moins un sous-dictionnaire ou branche du dictionnaire ou pour un d'au moins un caractère correspondant à une zone où la pression se produit.

11. Le procédé selon la revendication 10, dans lequel dans le cas où le processus de thread auxiliaire détermine que tout caractère correspondant à la pression est invalide, le processus de thread principal termine l'au moins un thread auxiliaire activé pour le caractère spécifique.

12. Le procédé selon la revendication 9, dans lequel avant que le caractère et/ou les mots candidat résulte de la recherche réalisée pour la pression, il est déterminé si un temps que la recherche a pris dépasse un premier seuil, et si le temps dépasse le premier seuil et il y a un autre thread auxiliaire en cours, la recherche est fusionnée avec une recherche réalisée dans l'autre thread auxiliaire en une recherche nouvelle, ou si il n'y a pas d'autre thread auxiliaire en cours, une recherche nouvelle est commencée.

13. Le procédé selon la revendication 9, dans lequel la réalisation de la recherche dans le dictionnaire pour le caractère entré correspondant à la zone où la pression se produit comprend: obtenir un caractère attribué à une clé située dans la zone ou obtenir un caractère correspondant d'un processus de correction de système effectué en fonction de la zone.

14. Le procédé selon la revendication 9, comprenant en outre: lors de détecter la pression sur l'écran tactile, modifier un état de la zone où la pression se produit, et lors de détecter le soulèvement, restaurer la zone à son état d'origine.
